# EUROPÄISCHE PATENTANMELDUNG

(11) **EP 2 385 508 A2**
(43) Veröffentlichungstag der Anmeldung: **09.11.2011**
(21) Anmeldenummer: 11003285.1
(22) Anmeldetag: 19.04.2011
(51) Int. Cl.: G08G 1/00, G01S 7/40, G01S 13/93

(54) **Verfahren zum Überprüfen einer Kalibrierung eines Kraftfahrzeug-Umfeldsensors**

(30) Priorität: 24.04.2010 DE 102010018088
(71) Anmelder: Audi AG, 85045 Ingolstadt (DE)
(72) Erfinder: Bouzouraa, Mohamed Essayed, 85049 Ingolstadt (DE)
(74) Vertreter: Thielmann, Frank

(57) **Zusammenfassung**

Im Rahmen einer Car-to-car-Kommunikation werden Messdaten von Umfeldsensoren eines Fahrzeugs, die ein bestimmtes Objekt (32) betreffen, an ein anderes Fahrzeug (10) übermittelt. Dort erfassen Umfeldsensoren (12) ebenfalls das Objekt (32), und es ist ein Vergleich möglich, aufgrund dessen ermittelt werden kann, ob die Kalibrierung in dem Fahrzeug (10) korrekt ist. Es kann ein Warnsignal abgegeben werden oder sogar eine Neukalibrierung aufgrund der Messdaten erfolgen, insbesondere wenn Messdaten eines dritten Fahrzeugs (36) hinzutreten.

## Beschreibung

Die Erfindung betrifft ein Verfahren zum Überprüfen einer Kalibrierung betreffend eine (Mess-) Einrichtung zum Erfassen einer Umgebung eines bestimmten Fahrzeugs. Hier wird zum Überprüfen der Kalibrierung in dem Fahrzeug ein erster Messdatensatz von der Einrichtung zum Erfassen gewonnen. Die Erfindung betrifft auch ein Kraftfahrzeug.

Als Einrichtung zum Erfassen einer Umgebung eines bestimmten Fahrzeugs sind so genannte Umfeldsensoren im Einsatz. Diese können die Umgebung des Kraftfahrzeugs abtasten, z. B. senden Radar- oder Lasersysteme elektromagnetische Strahlung aus und empfangen ein Antwortsignal. Statt eines Sensor kann auch eine Kamera eingesetzt werden.

Aufgrund dieser Antwortsignale oder Bildern der Kamera werden Messdaten gewonnen, die eine Aussage über das Vorhandensein von Hindernissen im Umfeld des Kraftfahrzeugs bereitstellen. Dies können die Koordinaten von Punkten auf der Oberfläche des Hindernisses im Koordinatensystem des messenden Kraftfahrzeugs sein, aber auch die Form des Hindernisses bzw. seine Ausrichtung. Bei der vorliegenden Anmeldung wird es als bekannt vorausgesetzt, dass solche Daten aus den Messsignalen der Umfeldsensoren abgeleitet werden können, sofern sie nicht unmittelbar zur Verfügung stehen. Ein Beispiel für die im Stand der Technik entwickelten Verfahren für das Erfassen von Strukturen durch Umfeldsensoren eines Kraftfahrzeugs gibt z. B. die DE 10 2004 048 400 A1.

Ebenfalls Gegenstand der Entwicklung im Stand der Technik ist das Austauschen von Daten zwischen unterschiedlichen Fahrzeugen, insbesondere während der Fahrt. Diese so genannte Car-to-car-Kommunikation erfolgt z. B. zum Zwecke einer Erhöhung der Sicherheit oder des Betreibens eines Systems, bei dem ein Kraftfahrzeug selbständig gesteuert wird, etwa in einem bestimmten Abstand zu einem vorausfahrenden Fahrzeug fährt.

Im Zusammenhang mit Sensorsignalen ist es aus der US 2008/0284575 A1 bekannt, aufgrund der Signale einer Vielzahl von Sensoren in einem Kraftfahrzeug intern eine Diagnose über den Zustand des Kraftfahrzeugs durchzuführen und das Ergebnis der Diagnose drahtlos an eine außerhalb des Fahrzeugs befindliche Zentrale zu senden.

Eine Kalibrierung von Sensoren eines Fahrzeugs erfolgt üblicherweise in einer Werkstatt. Umfelderfassungssensoren (Einrichtungen zum Erfassen einer Umgebung eines bestimmten Fahrzeugs) müssen auf ganz bestimmte Art und Weise an dem Kraftfahrzeug montiert sein. Der Ort der Montage kann in drei Koordinaten des dreidimensionalen Raums von dem Sollort abweichen. Genauso kann auch die Ausrichtung des Sensors von einer Sollausrichtung abweichen, wozu drei verschiedene Arten von Drehwinkeln definiert werden können.

Die Aufgabe der Kalibrierung in der Werkstatt besteht darin, den Sensor entweder in die Sollposition mit der Sollausrichtung zu versetzen oder dafür zu sorgen, dass intern Abweichungen zwischen Soll und Ist rechentechnisch ausgeglichen werden. Gerade bei einer Einrichtung zum Erfassen einer Umgebung wäre es wünschenswert, könnten Kalibrierungen auch im Betrieb erfolgen. Um dies zu verwirklichen, verwendet man so genannte Prüfkörper, die von den Einrichtungen zum Erfassen einer Umgebung zu erfassen sind. Es bedarf dann jedoch genaue Messungen bezüglich der Position der Prüfkörper.

Es ist Aufgabe der Erfindung, ein Verfahren zum Überprüfen einer Kalibrierung betreffend eine Einrichtung zum Erfassen einer Umgebung eines bestimmten Fahrzeugs nach dem Oberbegriff von Patentanspruch 1 dahingehend weiterzuentwickeln, dass es besonders zuverlässig ist, ohne dass übermäßiger Aufwand getrieben werden müsste. Zur Aufgabe gehört es, ein zugehöriges Kraftfahrzeug bereitzustellen.

Die Aufgabe wird hinsichtlich des Verfahrens durch den Gegenstand des Patentanspruchs 1 gelöst, hinsichtlich des Kraftfahrzeugs durch den Gegenstand des Patentanspruchs 8.

Erfindungsgemäß wird es somit neben dem ersten Messdatensatz, der von der Einrichtung zum Erfassen des bestimmten Fahrzeugs selbst gewonnen wird, ein zweiter Messdatensatz einer Einrichtung zum Erfassen einer Umgebung, die einem zweiten Fahrzeug zugehört, durch das bestimmte Fahrzeug empfangen und bei dem in dem bestimmten Fahrzeug durchgeführten Verfahren berücksichtigt.

Die Erfindung nutzt somit die Möglichkeit, dass Fahrzeuge miteinander kommunizieren können, dazu, dass Messdaten einer Einrichtung zum Erfassen einer Umgebung drahtlos von einem Fahrzeug auf ein anderes Fahrzeug übertragen werden. In dem empfangenden Fahrzeug stehen dann zwei Messdatensätze zur Verfügung, und im Rahmen eines Abgleichs kann dann ermittelt werden, ob beide Fahrzeuge ein bestimmtes Objekt (Hindernis) in gleicher Weise erfassen oder nicht. Gegebenenfalls kann dann sogar eine Neukalibrierung erfolgen.

Die Erfindung hat den Vorteil, dass während des Betriebs des Fahrzeugs grundsätzlich ständig, nämlich sobald ein anderes Fahrzeug mit der entsprechenden Ausstattung in der Nähe befindlich ist, eine Überprüfung der Kalibrierung der Einrichtung zum Erfassen einer Umgebung erfolgt. Es muss nicht abgewartet werden, dass das Fahrzeug in eine bestimmte Prüfsituation gebracht wird, sondern die Prüfsituation entsteht von selbst während der Fahrt.

Voraussetzung ist, dass zumindest in gewisser Hinsicht vergleichbare Messdaten durch die beiden Kraftfahrzeuge gewonnen werden. Bei dem Verfahren erfolgt dann bevorzugt eine Zuordnung der Messdaten des ersten Messdatensatzes zu den Messdaten des zweiten Messdatensatzes nach einem vorbestimmten Zuordnungskriterium. Hierbei können entweder Messdaten unmittelbar einander zugeordnet werden, z. B. Koordinaten auf der Oberfläche eines Hindernisses. Genauso kann auch eine Größe aus diesen Messdaten abgeleitet werden, z. B. eine Kontur, falls diese noch nicht Gegenstand der übermittelten Messdaten ist, und die jeweils abgeleiteten Größen können dann miteinander verglichen werden. Durch das Zuordnen werden die formal vergleichbaren Messdaten dann durch eine Auswertesoftware tatsächlich vergleichbar gemacht, so dass das Verfahren durch die Software fortgeführt werden kann.

Bei einer besonders einfachen Ausführungsform wird lediglich überprüft, ob die Kalibrierung noch passt. So kann, wenn das Vergleichen eine nach einem vorbestimmten Vergleichskriterium zu starke Abweichung der zugeordneten Messdaten oder jeweils zumindest einer daraus abgeleiteten Größe voneinander ergibt, ein Warnsignal durch das bestimmte Fahrzeug an seinen Fahrzeugführer ausgegeben werden (optisch, z. B. leuchtet ein Lämpchen, oder es wird eine Textanzeige auf einem Display angegeben; akustisch, z. B. wird ein Hupsignal ausgegeben; haptisch z. B. vibriert das Lenkrad).

Dem Fahrzeugführer wird dann während der Fahrt unmittelbar mitgeteilt, dass die Kalibrierung seines eigenen Fahrzeugs mit der eines zweiten Fahrzeugs nicht übereinstimmt, so dass mit einer gewissen Wahrscheinlichkeit seine eigene Kalibrierung falsch ist. Gegebenenfalls wird das Warnsignal erst dann ausgegeben, wenn ein solcher Vergleich mehrfach erfolgt ist, dann besteht eine erhöhte Sicherheit dafür, dass tatsächlich die eigene Kalibrierung falsch ist. Der Fahrzeugführer wird dann dazu gebracht, eine Werkstatt aufzusuchen.

In Verfeinerung des oben Beschriebenen kann vorgesehen sein, dass zunächst eine Plausibilisierung der empfangenen Messdaten durchgeführt wird. Dies erfolgt bei einer bevorzugten Ausführungsform dadurch, dass ein dritter Messdatensatz einer Einrichtung zum Erfassen der Umgebung, die einem dritten Fahrzeug zugehört, durch das bestimmte Fahrzeug empfangen wird, und diese enthält Messdaten, die den zweiten Messdaten nach einem vorbestimmten Zuordnungskriterium zugeordnet werden können. Dann wird nach einem vorbestimmten Vergleichskriterium ermittelt, ob eine ausreichende Übereinstimmung besteht. Besteht keine Übereinstimmung, so ist entweder der zweite oder dritte Messdatensatz, wenn nicht beide, dergestalt, dass ein Abgleich mit dem eigenen ersten Messdatensatz nicht sinnvoll ist. Es lässt sich dann nicht sagen, wo ein möglicher Fehler liegt, ob also die Einrichtung zum Erfassen der Umgebung des zweiten oder des dritten Fahrzeugs nicht ganz ideal kalibriert ist. Wenn aber eine Übereinstimmung nach dem vorbestimmten Vergleichskriterium als gegeben ermittelt wird, kann eine Zuordnung der zweiten und dritten Messdaten zu den ersten Messdaten nach einem (weiteren oder selben) Zuordnungskriterium erfolgen, und nach einem (weiteren oder selben) Vergleichskriterium kann dann ermittelt werden, ob eine ausreichende Übereinstimmung besteht. Hier ist es dann so, dass bei Nichtgegebensein einer solchen Übereinstimmung davon auszugehen ist, dass - da ja die zweiten und dritten Messdaten nach ihrer Zuordnung eine Übereinstimmung ergeben - die eigene Kalibrierung fehlerhaft ist. Dann erfolgt also bei Nichtgegebensein der Übereinstimmung bei dem zweiten Vergleich eine Neukalibrierung der Einrichtung zum Erfassen anhand zumindest eines Datensatzes der zweiten und dritten Messdatensätze, bevorzugt auch anhand des ersten Datensatzes.

Nach dem der Rekursion zugrundeliegenden Prinzip kann dann ein Optimum gefunden werden, was die Kalibrierung angeht. Insbesondere kann das Neukalibrieren unter Verwendung aller gewonnenen und aller empfangenen Messdatensätze erfolgen, also dem ersten selbstgewonnenen Messdatensatz und dem zweiten und dritten Messdatensatz, eventuell noch einem vierten und fünften von einem vierten und einem fünften Fahrzeug etc., und zwar kann dieses Neukalibrieren nach einem Kriterium der Minimierung einer vorbestimmt definierten Größe erfolgen, bei anderer Definition der Größe auch nach ihrer Maximierung.

Eine solche Größe ist typischerweise eine Summe von Abständen, Abstandsquadraten o. ä. zwischen Punkten zu Messdaten in einem bestimmten Messdatenkoordinatensystem.

Wie schon eingangs erwähnt, umfassen die Messdatensätze, die von der Einrichtung zum Erfassen einer Umgebung eines jeweiligen Fahrzeugs gewonnen werden, z. B. Informationen über den Abstand eines Hindernisses bzw. einzelner Punkte desselben, über seine Form und/oder auch seine Ausrichtung im dreidimensionalen Raum, insbesondere auf der zweidimensionalen Fläche der Straße.

Der Schritt der Zuordnung kann insbesondere an die Information über die Form und die Ausrichtung des Hindernisses anknüpfen und mit einer Plausibilisierung arbeiten. Mathematisch ist eine Zuordnung insbesondere von Abstandsdaten dann besonders gut möglich, wenn auch die Position der beteiligten Fahrzeuge bekannt ist. Somit wird bevorzugt von dem bestimmten Fahrzeug auch die Position des zweiten und bei den entsprechenden Ausführungsformen des Verfahrens auch des dritten Fahrzeugs von dem bestimmten Fahrzeug empfangen, und bei der Zuordnung der Messdaten wird diese Information verwendet, insbesondere bei der Zuordnung der Messdaten des zweiten und dritten Messdatensatzes zum ersten Messdatensatz auch noch eine Information über die Position des bestimmten Fahrzeugs selbst.

In einem einfachen Beispiel wird von einem bestimmten Fahrzeug ein Abstand zu einem bestimmten Punkt auf einem Hindernis gemessen, und zu demselben Punkt misst ein zweites Fahrzeug seinen Abstand. Sind dann die Positionen beider Fahrzeuge bekannt, kennt man auch den Abstand zwischen den beiden Fahrzeugen, und es lässt sich ein Dreieck konstruieren. Kennt man den Abstand zu einem zweiten Punkt auf dem Hindernis, lässt sich ein zweites Dreieck konstruieren, aber nur bei idealer Kalibrierung beider Fahrzeuge erhält man eine konsistente Lösung, sonst muss man davon ausgehen, dass zumindest eine Seitenlänge zumindest eines Dreiecks falsch gemessen ist.

Durch einen Abgleich lässt sich dann ein ideales Bild ermitteln, wo sich das Hindernis tatsächlich befindet und feststellen, wie das eigene. Fahrzeug (das bestimmte Fahrzeug) idealerweise kalibriert werden müsste, wenn von der Richtigkeit der Kalibrierung des zweiten Fahrzeugs ausgegangen ist.

Das erfindungsgemäße Kraftfahrzeug weist eine Einrichtung zum Erfassen des Umfelds des Kraftfahrzeugs auf, durch welche Messdaten gewinnbar sind, und es weist eine Empfangseinrichtung zum Empfangen von drahtlos von einem anderen Fahrzeug übermittelten Datensignalen auf. Schließlich weist es eine Datenverarbeitungseinrichtung auf, die dazu ausgelegt ist, im Normalbetrieb die von der Einrichtung zum Erfassen gewonnen Messdaten auszuwerten und zudem bei Empfang eines Datensignals von einem anderen Fahrzeug die von der Einrichtung zum Erfassen gewonnenen Messdaten einerseits und die durch Datensignale übermittelten Daten andererseits durch Zuordnung zueinander und nachfolgenden Vergleich zusammen zu verarbeiten, insbesondere zum Zwecke bzw. mit dem Ergebnis der Abgabe eines Warnsignals oder einer Neukalibrierung der Einrichtung zum Erfassen.

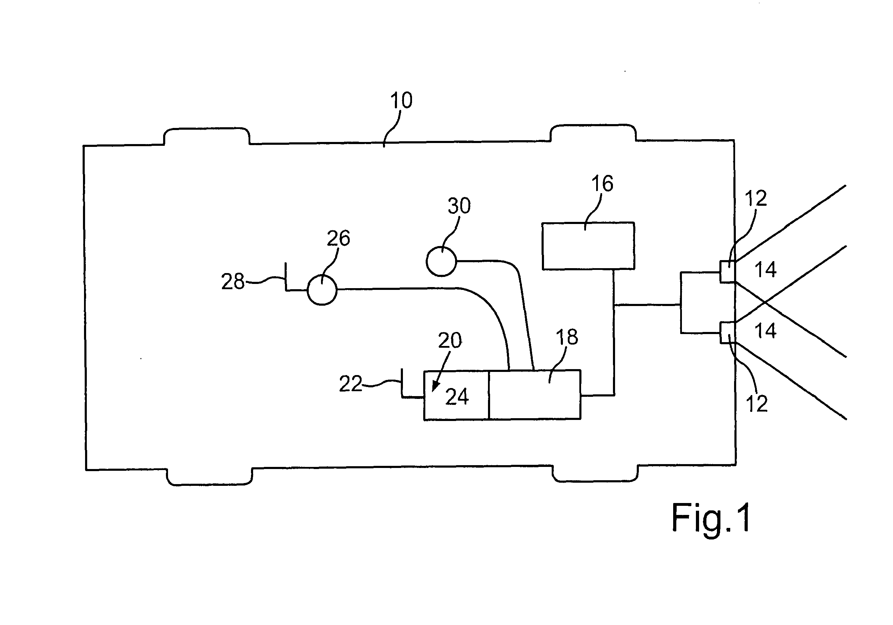

Nachfolgend wird eine bevorzugte Ausführungsform der Erfindung unter Bezug auf die Zeichnung beschrieben, in der
- Fig. 1: in schematischer Draufsicht ein Kraftfahrzeug gemäß einer Ausführungsform der Erfindung veranschaulicht,
- Fig. 2: in schematischer Draufsicht eine Straßensituation zeigt, in der sich das Kraftfahrzeug aus Fig. 1 mit entsprechenden oder ähnlichen Kraftfahrzeugen befindet, und

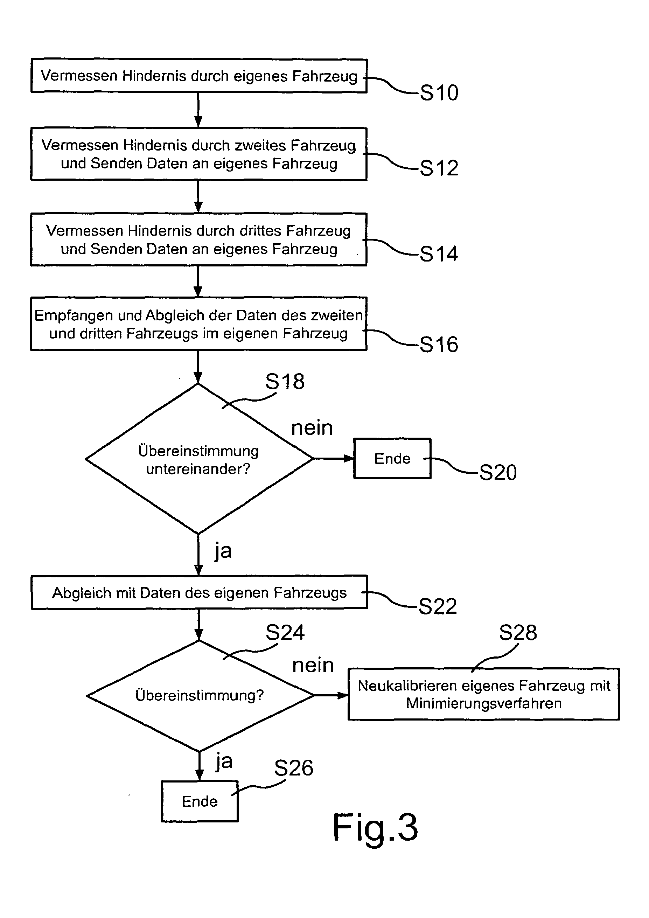

- Fig. 3: ein Flussschaubild zur Erläuterung der Schritte des erfindungsgemäßen Verfahrens gemäß einer Ausführungsform ist.

Ein im Ganzen mit 10 bezeichnetes Kraftfahrzeug weist zwei Umfeldsensoren 12 auf, welche z. B. als Radarsensoren ausgebildet sind und in der Lage sind, jeweilige Felder 14 abzutasten. Die Umfeldsensoren 12 senden ihre Messsignale an ein Motorsteuergerät 16, das unter vorbestimmten Umständen Eingriffe vornimmt. Beispielsweise kann dies im Rahmen einer Abstandsregelung erfolgen: Mithilfe der Umfeldsensoren wird erfasst, wie groß der Abstand zu einem vorausfahrenden Fahrzeug ist, und die Motorsteuerung 16 steuert den (nicht gezeigten) Verbrennungsmotor des Kraftfahrzeugs derart an, dass ein vorbestimmter Abstand zum vorausfahrenden Fahrzeug eingehalten wird. Es ist hierbei davon ausgegangen, dass zu den Umfeldsensoren 12 eine Kalibrierung vorgenommen ist.

An dieser Kalibrierung kann ein weiteres Steuergerät 18 eine Änderung vornehmen. Das weitere Steuergerät 18 ist zum einen mit einer externen Sende- und Empfangseinrichtung 20 gekoppelt, die aus der eigentlichen Antenne 22 und einem Modulator-Demodulator 24 besteht. Mithilfe der Sende- und Empfangseinrichtung 20 ist eine Kommunikation zwischen dem Kraftfahrzeug 10 und einem externen anderen Kraftfahrzeug möglich und umgekehrt. Das Kraftfahrzeug 10 weist eine Einrichtung 26 zum Messen seiner Position auf, z. B. kann durch eine Antenne 28 ein Signal eines Satelliten empfangen werden, insbesondere im Rahmen des so genannten "Global Positioning Systems", GPS. Die Positionsdaten werden dem Steuergerät 18 zugeführt. Das Steuergerät 18 ist ferner mit einem Sensor 30 gekoppelt, der eine Information über den gegenwärtigen Zustand des Kraftfahrzeugs gibt, der einen Einfluss auf die Messwerte der Umgebungssensoren 12 hat. Beispielsweise kann es sich um einen Sensor 30 handeln, der den Nickwinkel des Kraftfahrzeugs 10 misst. Der Wert dieses Nickwinkels wird dem Steuergerät 18 zugeführt und bei der Auswertung der Messdaten der Umfeldsensoren 12 korrigierend berücksichtigt.

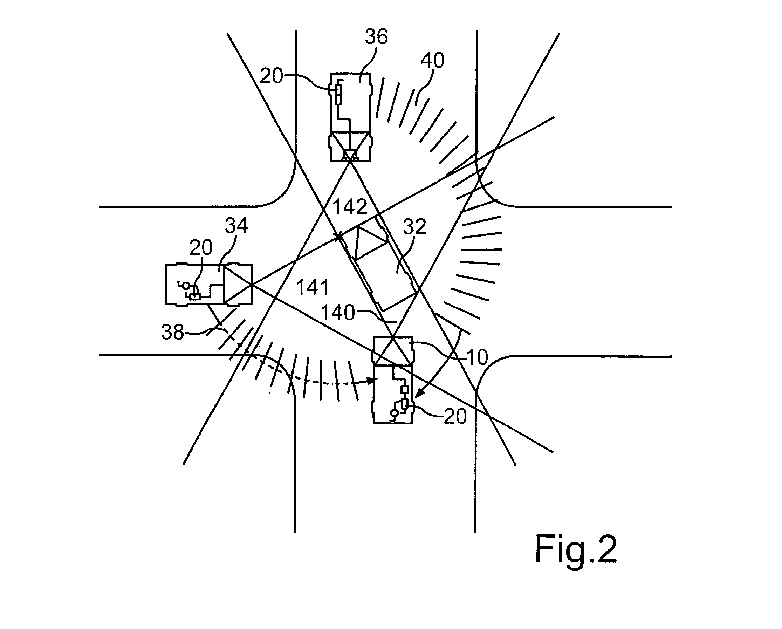

In einer in Fig. 2 gezeigten Straßensituation befindet sich das Kraftfahrzeug 10 hinter einem Objekt 32, das ein Fahrzeug sein kann, und dieses befindet sich im Erfassungsbereich 140 der beiden Umfeldsensoren 12. Ein neben dem Fahrzeug 10 zweites Kraftfahrzeug 34 hat einen Erfassungsbereich 141, in dem sich ebenfalls das Objekt 32 befindet. Schließlich hat ein drittes Kraftfahrzeug 36 ebenfalls einen Erfassungsbereich 142, in dem sich das Objekt 32 ebenfalls befindet.

Alle drei Kraftfahrzeuge 10, 34 und 36 können somit das Objekt 32 erfassen. Die jeweiligen Erfassungseinrichtungen dienen in allen drei Kraftfahrzeugen 10, 34 und 36 zur Gewinnung von Messdatensätzen. Diese Messdatensätze oder daraus aufbereitete Daten werden über eine Funkstrecke 38 bzw. 40 von dem Kraftfahrzeug 34 bzw. 36 an das Kraftfahrzeug 10 übermittelt, wozu die jeweiligen Sende- und Empfangseinheiten 20 der Kraftfahrzeuge genutzt werden.

Das erfindungsgemäße Verfahren wird nun wie folgt durchlaufen: Das eigene Kraftfahrzeug, vorliegend das Kraftfahrzeug 10, vermisst gemäß Schritt S10 ein Hindernis 32. Das zweite Fahrzeug 34 vermisst gemäß Schritt S12 dasselbe Hindernis 32 und sendet Daten hierüber an das eigene Kraftfahrzeug 10. Gleichzeitig wird die Position des Fahrzeugs 34 an das Kraftfahrzeug 10 übermittelt. Schließlich misst gemäß Schritt S14 auch das dritte Fahrzeug 36 das Hindernis 32 und sendet Daten hierüber sowie über seine eigene Position an das Kraftfahrzeug 10, siehe Schritt S14.

In Schritt S16 werden nun im eigenen Fahrzeug 10 diese ausgesandten Daten empfangen, und es erfolgt ein Abgleich der Daten des zweiten und dritten Fahrzeugs. Da die Positionen der Fahrzeuge 34 und 36 bekannt sind, lassen sich sämtliche Abstandsinformationen betreffend das Objekt 32 mithilfe einfacher Trigonometrie umrechnen von einem Bezugssystem auf das andere, und die Informationen der beiden Fahrzeuge können miteinander verglichen werden. In Schritt S18 wird dann geprüft, ob nach einem vorbestimmten Vergleichkriterium eine Übereinstimmung festzustellen ist: Beispielsweise kann das Fahrzeug 34 einen bestimmten Abstand zum Punkt P an der Ecke des Objekts 32 feststellen, das Fahrzeug 34 gleichzeitig seinen eigenen Abstand zu eben diesem Punkt. Mithilfe der Position der beiden Fahrzeuge 34 und 36 lässt sich dann im Fahrzeug 10 berechnen, wo der Punkt P liegt und lässt sich dasselbe für einen anderen (in der Figur nicht gezeigten) Punkt durchführen. Ist das Ergebnis dann stimmig, d. h. ergibt sich eine Form des Objekts 32, die mit den von den einzelnen Fahrzeugen 34 und 36 gemessenen Formen übereinstimmt, dann wird in Schritt S18 die Frage mit "Ja" beantwortet; ist das Ergebnis nicht stimmig, wird die Frage mit "Nein" beantwortet und das Verfahren gemäß Schritt S20 beendet. Wenn die Ergebnisse der Messungen durch die Fahrzeuge 34 und 36 nicht stimmig sind, kann das erste Fahrzeug nämlich nichts damit anfangen. Sind sie hingegen stimmig, erfolgt gemäß Schritt S22 ein Abgleich der Messdaten mit den Daten des eigenen Fahrzeugs 10. Hierbei kann ebenfalls die Position des eigentlichen Fahrzeugs 10, gemessen durch den Positionssensor 26, berücksichtigt werden. Es ist nun zu überprüfen, ob beispielsweise die Position des Punktes P, die sich aufgrund einer Ermittlung seiner Koordinaten anhand der Daten der Fahrzeuge 34 und 36 einerseits ergibt, mit der Position übereinstimmt, die sich aufgrund der Messung der Position des eigenen Fahrzeugs 10 und gleichzeitig des Abstands durch die Umfeldsensoren 12 ergibt.

Die Übereinstimmung wird in Schritt S24 nach einem vorbestimmten Vergleichskriterium überprüft. Ist diese Übereinstimmung gegeben, dann bedeutet dies, dass die Kalibrierungen sämtlicher drei Fahrzeuge 10, 34 und 36 aneinander angeglichen sind, also mit hoher Wahrscheinlichkeit korrekt sind, dann wird das Verfahren gemäß Schritt S26 beendet. Ist hingegen keine Übereinstimmung in Schritt S24 festgestellt, erfolgt in Schritt S28 ein Neukalibrieren des eigenen Fahrzeugs mithilfe eines Minimierungsverfahrens. Stimmen beispielsweise die Koordinaten des Punktes P, ermittelt aus den Messungen der Fahrzeuge 34 und 36, nicht mit den Koordinaten des Punktes P überein, wie sie aus den Messungen des Fahrzeugs 10 allein ermittelt sind, und gilt dies für weitere Punkte, so lassen sich Abstände zwischen den beiden Koordinaten jeweils ermitteln, und dies für eine Vielzahl von Punkten. Werden die mittleren Quadrate dieser Koordinaten minimiert, so ist ein bestmöglicher Abgleich nach einem vorbestimmten Kriterium geschaffen.

In dem Kraftfahrzeug nimmt die Steuereinheit dann aufgrund einer Neukalibrierung eine Korrektur der Messwerte der Umfeldsensoren 12 vor. Das Neukalibrieren bedeutet, dass die Messdaten auf vorbestimmte Weise verarbeitet werden, z. B. wird ein Korrekturalgorithmus verwendet, in dem die Zahlenwerte von der Kalibrierung abhängig sind. Grundsätzlich kann ermittelt werden, ob die Umfeldsensoren 12 in drei Raumkoordinaten versetzt sind gegenüber ihrer Sollposition, oder ob sie um eine oder mehrere von drei zueinander orthogonalen Achsen verkippt sind. Die Steuereinheit 18 kann das Ergebnis solch einer Versetzung oder Verkippung rechnerisch ausgleichen.

## Patentansprüche

1. Verfahren zum Überprüfen einer Kalibrierung betreffend eine Einrichtung (12) zum Erfassen einer Umgebung eines bestimmten Fahrzeugs (10), wobei in diesem Fahrzeug ein erster Messdatensatz von der Einrichtung (12) zum Erfassen gewonnen wird,
**dadurch gekennzeichnet, dass**
ein zweiter Messdatensatz einer Einrichtung (12) zum Erfassen einer Umgebung, wobei die Einrichtung einem zweiten Fahrzeug (34) zugehört, durch das bestimmte Fahrzeug (10) empfangen und bei dem Verfahren berücksichtigt wird, wobei das Verfahren in dem bestimmten Fahrzeug (10) durchgeführt wird.

2. Verfahren nach Anspruch 1,
**dadurch gekennzeichnet, dass**
die Messdaten des ersten Messdatensatzes den Messdaten des zweiten Messdatensatzes nach einem vorbestimmten Zuordnungskriterium zugeordnet werden und einander zugeordnete Messdaten oder zumindest einander zugeordnete, jeweils aus den Messdaten abgeleitete Größen miteinander verglichen werden.

3. Verfahren nach Anspruch 2,
**dadurch gekennzeichnet, dass**
wenn das Vergleichen einer nach einem vorbestimmten Vergleichskriterium eine zu starke Abweichung der zugeordneten Messdaten oder einander zugeordneten Größen voneinander ergibt, ein Warnsignal durch das bestimmte Fahrzeug (10) an den Fahrzeugführer ausgegeben wird.

4. Verfahren nach einem der vorhergehenden Ansprüche,
**dadurch gekennzeichnet, dass**
ein dritter Messdatensatz von einer Einrichtung (12) zum Erfassen der Umgebung, wobei die Einrichtung (12) einem dritten Fahrzeug (36) zugehört, durch das bestimmte Fahrzeug (10) empfangen wird, und wobei Messdaten des dritten Messdatensatzes den Messdaten des zweiten Messdatensatzes nach einem Zuordnungskriterium zugeordnet werden (S16), wobei nach einem vorbestimmten Vergleichskriterium ermittelt wird (S18), ob eine ausreichende Übereinstimmung besteht, und wobei bei Gegebensein der Übereinstimmung eine Zuordnung der Messdaten des zweiten und dritten Messdatensatzes zu den Messdaten des ersten Messdatensatzes nach einem Zuordnungskriterium erfolgt (S22) und nach einem Vergleichskriterium ermittelt wird (S24) ob eine ausreichende Übereinstimmung besteht, und wobei bei Nichtgegebensein einer solchen Übereinstimmung ein Neukalibrieren betreffend die Einrichtung (12) zum Erfassen zumindest anhand eines Datensatzes der zweiten und dritten Messdatensätze erfolgt.

5. Verfahren nach Anspruch 4,
**dadurch gekennzeichnet, dass**
das Neukalibrieren unter Verwendung aller gewonnnen und aller empfangenen Messdatensätze erfolgt, insbesondere nach einem Kriterium der Minimierung oder einem Kriterium der Maximierung einer vorbestimmt definierten Größe.

6. Verfahren nach einem der vorhergehenden Ansprüche,
**dadurch gekennzeichnet, dass**
die Messdatensätze eine Information über den Abstand zu einem Hindernis (32) oder von Punkten desselben, und/oder Informationen über die Form und/oder die Ausrichtung eines Hindernisses (32) wiedergeben.

7. Verfahren nach einem der vorhergehenden Ansprüche,
**dadurch gekennzeichnet, dass**
auch eine Information über die Position des zweiten Fahrzeugs (34) und gegebenenfalls des dritten Fahrzeugs (36) von dem bestimmten Fahrzeug (10) empfangen wird und bei der Zuordnung der Messdaten diese Information verwendet wird, gegebenenfalls zusammen mit einer Information über die Position des bestimmten Fahrzeugs (10) selbst.

8. Kraftfahrzeug (10) mit einer Einrichtung (12) zum Erfassen des Umfeldes (14) des Kraftfahrzeugs, durch welche Messdaten gewinnbar sind, und mit einer Empfangseinrichtung (20) zum Empfangen von drahtlos von einem anderen Fahrzeug (34, 36) übermittelten Datensignalen, sowie mit einer Datenverarbeitungseinrichtung (18), die ausgelegt ist, die von der Einrichtung (12) zum Erfassen gewonnenen Messdaten auszuwerten und die von der Einrichtung (12) zum Erfassen gewonnen Messdaten einerseits und durch Datensignale übermittelte Daten andererseits durch Zuordnung zueinander und nachfolgenden Vergleich zusammen zu verarbeiten.

9. Kraftfahrzeug (10) nach Anspruch 1, bei dem das Verarbeiten ein Neukalibrieren betreffend die Einrichtung (12) zum Erfassen umfasst.
